# EUROPEAN PATENT SPECIFICATION

(11) **EP 2 054 250 B1**
(45) Date of publication and mention of the grant of the patent: **09.03.2016**
(21) Application number: 07859149.2
(22) Date of filing: 20.12.2007
(51) Int. Cl.: B60H 1/32

(54) **VEHICULAR AIR-CONDITIONER DEVICE**
FAHRZEUGKLIMAANLAGE
DISPOSITIF DE CLIMATISATION VÉHICULAIRE

(30) Priority: 25.12.2006 JP 2006348522
(43) Date of publication of application: 06.05.2009
(73) Proprietor: TOYOTA JIDOSHA KABUSHIKI KAISHA, Toyota-shi, Aichi-ken, 471-8571 (JP)
(72) Inventor: AJISAKA, Satoshi, Toyota-shi Aichi-ken 471-8571 (JP)
(74) Representative: Intès, Didier Gérard André
(86) International application number: PCT/IB2007/004043
(87) International publication number: WO 2008/078159

(56) References cited:
- DE-A1- 19 738 250
- DE-U- 1 752 448
- JP-A- 5 294 137
- US-A- 4 075 867

## Description

### BACKGROUND OF THE INVENTION

### 1. Field of the Invention

The invention relates to a vehicular air-conditioner device that air-conditions a cabin of a vehicle.

### 2. Description of the Related Art

In a vehicular air-conditioner device mounted in a vehicle for air-conditioning the cabin (hereinafter, referred to as "air-conditioner"), power conservation can be achieved by, for example, rotationally driving the compressor (compression machine) at the time of the cooling or dehumidification or the like of the cabin, and stopping the driving of the compressor at the time of the air-blowing or air-heating operation.

In such an air-conditioner, the cooling capability of the condenser affects the air-cooling capability of the air-conditioner, and the cooling of the air by the evaporator often results in condensation of moisture in the air. Therefore, a proposal for improving the air-cooling efficiency has been made in which the water or moisture condensed on the evaporator is recovered as drain water and then the recovered drain water is jetted to the condenser (e.g., see Japanese Patent Application Publication No. 5-87054 (JP-A-5-87054)).

In electric motor vehicles, fuel cell motor vehicles, etc., the compressor of the air-conditioner is driven by an electric motor. The compressor of the air-conditioner is also driven by an electric motor in some mid-engine vehicles in which an internal combustion engine that serves as a drive source for moving the vehicle is disposed at a rear side of the cabin, some hybrid vehicles that have an electric motor in addition to an internal combustion engine as drive sources for moving the vehicle, etc. In the air-conditioner, there are also other components driven by electric motors, including the cooling fan of the condenser, the blower fan that produces air-conditioned airflow etc.

Therefore, various proposals in which a plurality of components or accessories are driven by one electric motor have been made. For example, Japanese Patent Application Publication No. 59-186763 (JP-A-59-186763) discloses a construction in which an outside fan is coupled to a direct-current motor via a coupling, and a cabin-fan is coupled to a compressor via a belt. Japanese Patent Application Publication No. 6-171349 (JP-A-6-171349) discloses a construction in which a compressor and a cooling fan of a condenser are driven by a common electric motor. Furthermore, Japanese Patent Application Publication No. 2001-333557 (JP-A-2001-333557) makes a proposal in which a compressor for use for air-cooling and a viscous heater for use for air-heating or the like are combined, and are connected to an electric motor via electromagnetic clutches.

An air-conditioner is constructed of an air-conditioner unit in which a blower fan, an evaporator, etc., are housed, and a compressor as well as a condenser, a cooling fan for cooling the condenser, etc. Japanese Patent Application Publication No. 2001-171340 (JP-A-2001-171340) proposes that these components and the like be housed in one casing and a fan corresponding to the condenser and a fan corresponding to the evaporator are coupled to a common electric motor, so that a compact construction can be achieved. JP 5294137 discloses a vehicular air conditioner device according to the preamble of claim 1.

In vehicles, the air-conditioner unit is disposed at cabin interior-side of a dash panel, and therefore reduces the space of a front portion of the cabin. Therefore, it has been proposed that the air-conditioner unit and an electric compressor be housed in one box, and be mounted at a vehicle front side of the dash panel, so that the space in a front portion of the cabin can be expanded.

Thus, to achieve a compact construction of an air-conditioner, it is preferable to provide the air-conditioner in one unit, and it is also preferable that a plurality of accessories or components be driven by one electric motor.

In air-conditioners, however, the accessories, including the blower fan, the compressor, the cooling fan, etc., need to be driven as mentioned above. In the related-art method as mentioned above, if two accessories are driven by one electric motor, this single electric motor cannot drive all the accessories and therefore a plurality of electric motors are needed. Or, if belts are used in order to drive three or more accessories by one electric motor, the compact construction is impeded.

### SUMMARY OF THE INVENTION

The invention has been accomplished in view of the foregoing facts. It is an object of the invention to provide a vehicular air-conditioner device in which the compressor, the condenser fan and the blower fan can be properly driven by one electric motor, and a vehicular air-conditioner device that allows a more compact construction.

In order to achieve the foregoing and other objects, the invention provides a vehicular air-conditioner device which has a refrigeration cycle (or coolant cycle) that includes a compressor, a condenser, and an evaporator, and which air-conditions a cabin by an air-conditioned airflow generated by causing air to pass through the evaporator or heating means through driving the blower fan, the vehicular air-conditioner device being characterized in that the vehicular air-conditioner device includes an electric motor that drives the compressor, the blower fan, and a condenser fan that cools the condenser, and an end of a driving shaft of the electric motor is coupled to a rotation shaft of the compressor via first clutch means, and another end of the driving shaft is coupled to a rotation shaft of the blower fan, and the condenser fan is coupled to one of the rotation shaft of the compressor and the rotation shaft of the blower fan via second clutch means.

According to the foregoing vehicular air-conditioner device, in order to drive the compressor, the blower fan and the condenser fan by a single electric motor, an end of the driving shaft of the electric motor is coupled to the rotation shaft of the compressor via the first clutch means, and the other end of the driving shaft is coupled to the rotation shaft of the blower fan.

For the air-conditioning of the cabin, the blower fan is always rotated, but the compressor is driven in accordance with the air-cooling load, and the condenser fan is driven in accordance with need when the compressor is driven.

Therefore, the rotation shaft of the condenser fan is coupled to the rotation shaft of the compressor or the rotation shaft of the blower fan via the second clutch means.

As a result, the blower fan, the compressor and the condenser fan can be rotationally driven at their respective proper timings solely by the electric motor. Furthermore, the unnecessary rotational driving of the compressor and the condenser fan and, particularly, of the condenser fan can be restrained, so that the load of the electric motor can be reduced and power conservation can be achieved.

Furthermore, in the foregoing vehicular air-conditioner device, it is preferable that the vehicular air-conditioner device include an air-conditioner module that houses the blower fan and the evaporator and that generates the air-conditioned airflow and a condenser module that houses at least the condenser and the condenser fan, and that the air-conditioner module and the condenser module be integrally coupled so that the rotation shaft of the blower fan and a rotation shaft of the condenser fan are coaxial.

Furthermore, in the foregoing vehicular air-conditioner device, it is preferable that the vehicular air-conditioner device include an air duct that has an end near the evaporator and has another end near the condenser. Still further, it is also preferable that the one end of the air duct be coupled to a suction opening formed in a casing of the air-conditioner module, and that the another end of the air duct be coupled to a discharge opening formed in a casing of the condenser module.

According to the vehicular air-conditioner device as described above, the air cooled by the evaporator is sent from the suction opening of the casing near the evaporator to the condenser module through the air duct, and is discharged from the discharge opening of the casing of the condenser module. Since the discharge opening is located near the condenser, the cooled air cools the condenser. Hence, it becomes possible to restrain the temperature rise of the condenser.

Furthermore, it is also preferable that the condenser fan be a cross-flow fan, and that the compressor and the electric motor be disposed in a hollow of the condenser fan.

According to the vehicular air-conditioner device as described above, a cross-flow fan that has an inner hollow space and that allows air to pass through the hollow space is used as the condenser fan, and the compressor and the electric motor are integrally disposed in the hollow of the condenser fan. That is, the compressor, the electric motor, etc. are integrally housed together with the condenser and the blower fan within the condenser module.

Therefore, greater reduction of the required space can be achieved and the device can be made more compact than in the case where the condenser fan, the compressor and the electric motor are disposed side by side.

Furthermore, it is also preferable that the condenser be disposed so that a cooling airflow for cooling the condenser passes in a vehicle up-down direction, and that the vehicular air-conditioner device further include collection means for collecting water from air that deposits on the evaporator, and diffusion means for guiding the water collected by the collection means to the condenser and dripping the water to the condenser while diffusing the water.

According to the vehicular air-conditioner device as described above, the water from air that condenses and deposits on the evaporator as the compressor is driven is collected, and is dripped to the condenser while being diffused.

As a result, even when the cooling of the condenser becomes necessary as the compressor is driven, the condenser can be efficiently cooled. Thus, the driving of the condenser fan for the purpose of cooling the condenser can be restrained.

As described above, according to the invention, in the case where the compressor, the blower fan and the condenser fan are driven by a single electric motor, and they can be driven at their respective proper timings.

Therefore, it becomes possible to reduce the load of the electric motor and achieve power conservation while making a compact construction of the device.

Furthermore, in the invention, the device can be made more compact by disposing the compressor and the electric motor within the condenser fan that is a cross-flow fan.

### BRIEF DESCRIPTION OF THE DRAWINGS

The features, advantages, and technical and industrial significance of this invention will be better understood by reading the following detailed description of preferred embodiments of the invention, when considered in connection with the accompanying drawings, in which:
FIG. 1 is a schematic perspective view showing portions of an air-conditioner to which a first embodiment of the invention is applied;
FIG. 2 is a schematic construction diagram of the air-conditioner in accordance with the embodiment;
FIG. 3 is a schematic sectional view of the air-conditioner taken along a line 3-3 of FIG. 1;
FIG. 4 is a view of portions of the air-conditioner of FIG. 1 viewed from above;
FIG. 5A is a schematic sectional view of the air-conditioner module taken along a line 5A-5A of FIG. 1;
FIG. 5B is a schematic sectional view of a condenser module taken along a line 5B-5B of FIG. 1;
FIG. 6 is a schematic perspective view of portions of an air-conditioner, showing an example of a speed change mechanism;
FIG. 7 is a schematic perspective view showing portions of an air-conditioner to which a second embodiment is applied;
FIG. 8 is a schematic construction diagram of the air-conditioner to which the second embodiment is applied, viewed from a rear side in the vehicle longitudinal direction;
FIG. 9 is a schematic sectional view of portions of a coolant module;
FIG. 10 is a schematic perspective view of portions of an air-conditioner to which a third embodiment is applied;
FIG. 11A is a schematic sectional view of an air-conditioner module taken along a line 11A-11A of FIG. 10; and
FIG. 11B is a schematic sectional view of a condenser module taken along a line 11B-11B of FIG. 10.

### DETAILED DESCRIPTION OF THE EMBODIMENTS

In the following description and the accompanying drawings, the present invention will be described in more detail with reference to exemplary embodiments.

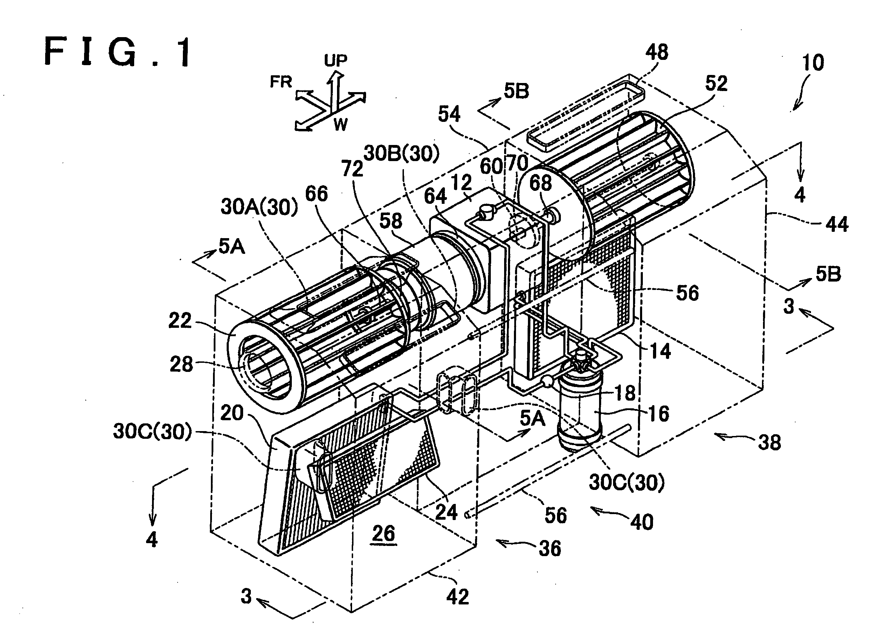

Hereinafter, embodiments of the invention will be described with reference to the drawings. FIG. 1 shows an overall construction of a vehicular air-conditioner device (hereinafter, termed the air-conditioner 10) in accordance with a first embodiment of the invention. The air-conditioner 10 in accordance with this embodiment may be mounted in a vehicle that runs on the drive force of an internal combustion engine, but is preferably mounted in a vehicle that runs on the drive force of an electric motor, such as a hybrid vehicle, an electric motor vehicle, a fuel cell motor vehicle, etc. The following description will be made on the assumption that the air-conditioner 10 is mounted a hybrid vehicle that has an internal combustion engine and an electric motor as drive sources for moving the vehicle.

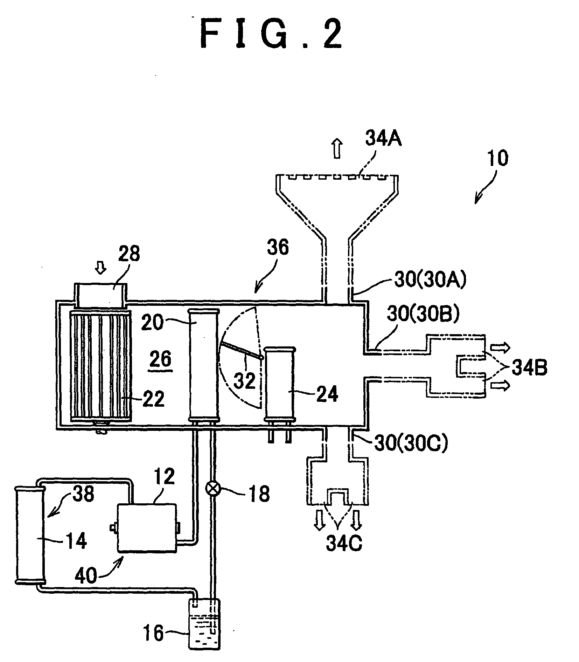

FIG. 2 shows a basic construction of the air-conditioner 10 in accordance with this embodiment. In the air-conditioner 10, a refrigeration cycle in which a coolant is circulated is formed by a compressor 12, a condenser 14, a receiver 16, an expansion valve 18 and an evaporator 20. In this refrigeration cycle, the coolant is compressed to have high temperature and high pressure by rotationally driving the compressor 12, and is thereby sent to the condenser 14, and the coolant is cooled and therefore liquefied by the condenser 14. An the evaporator 20, the coolant liquefied by the condenser 14 vaporizes, cooling the air that passes through the evaporator 20 (passes from a left side of the evaporator 20 to a right side thereof in FIG. 2). Furthermore, on the evaporator 20, moisture in the cooled air condenses, so that the air passing through the evaporator 20 is dehumidified.

The condenser 14 liquefies the coolant. However, a part of the coolant is not liquefied and the coolant includes gaseous fraction of the coolant. Thus, the receiver 16 separates the coolant into the liquefied coolant and gaseous coolant. Then, the receiver 16 sends the liquefied coolant to the expansion valve 18. Besides, the expansion valve 18 atomizes the liquefied coolant by rapidly decompressing the liquefied coolant, and sends the atomized coolant into the evaporator 20, thus allowing improvement in the coolant vaporizing efficiency of the evaporator 20, that is, the cooling efficiency of the evaporator 20.

The air-conditioner 10 is provided with a blower fan 22 and a heater core 24, and has a channel 26 of air that passes from the blower fan 22 through the evaporator 20 and a heater core 24. This channel 26 is provided with an introduction opening 28. The introduction opening 28 is linked in communication with the outside of the vehicle and the inside of the cabin via an introduction box (not shown). Another end side of this channel 26 is coupled to a plurality of outlet ducts 30.

Therefore, in the air-conditioner 10, when the blower fan 22 is rotationally driven, air is drawn from outside the vehicle and from the cabin, and is sent into the evaporator 20, and the air having passed through the evaporator 20 and the heater core 24 is sent as air-conditioned airflow into the outlet ducts 30.

The channel 26 between the evaporator 20 and the heater core 24 is provided with an air-mixing damper 32. The air-mixing damper 32 divides the air having passed through the evaporator 20 into a portion of air that passes through the heater core 24 and a portion of air that bypasses the heater core 24. The divided portions of air are mixed at a downstream side of the heater core 24.

The heater core 24 is provided as heating means. An engine cooling liquid is circulated between the heater core 24 and an engine (not shown). At the heater core 24, heat exchange occurs between the air passing through the heater core 24 and the engine cooling liquid. Therefore, the air passing through the heater core 24 is heated.

Incidentally, although the description herein is made in conjunction with the heater core 24 used as heating means, it is also possible to use, for example, an electric heater or the like, in vehicle that are not provided with an engine, such as electric vehicles. These constructions are not restrictive, either. It is also possible to apply an arbitrary construction of heating the air-conditioned airflow for example, a construction in which a coolant heated through the use of heat that is discharged from the vehicle may be circulated via the heater core 24.

The air-conditioner 10 is designed so as to produce an air-conditioned wind of a desired temperature at a downstream side of the heater core 24 by controlling the amount of air heated by the heater core 24 and the amount of air that bypasses the heater core 24 and that remains unheated on the basis of the degree of opening of the air-mixing damper 32.

The air-conditioner 10 has various outlet ducts 30, including outlet ducts 30A having defroster outlet openings 34A directed toward the vehicle's front windshield pane, outlet ducts 30B having register outlet openings 34B directed toward the positions of occupants in the cabin, and outlet openings 30C having floor outlet openings 34C directed toward the positions of occupants' feet. Besides, in the air-conditioner 10, the outlet ducts 30A, 30B, 30C can be selectively opened by using a selection damper.

Therefore, the air-conditioner 10 is able to perform air-conditioning operation in a DEF mode of blowing out air-conditioned airflow toward window panes, a FACE mode of blowing out air-conditioned airflow toward occupants in the cabin, a FOOT mode of blowing out air-conditioned wind toward occupants' feet, a DEF/FOOT mode of blowing out air-conditioned airflow toward the window panes and occupants' feet, and a BI-LEVEL mode of blowing out air-conditioned airflow toward occupants and the occupant's feet.

The action of the air-conditioner 10 is controlled by a controller (air-conditioner ECU) (not shown). When operation conditions, such as a set temperature or the like, are set by using switches or the like of a control panel (not shown), the controller sets a target blowout temperature needed to achieve the set temperature in the cabin on the basis of the operation conditions and the environmental conditions, so that the air-conditioner 10 performs the air-conditioning of the cabin with a blower airflow amount in a blowout mode set on the basis of the operation conditions and the environmental conditions. A basic control of the air-conditioner 10 for this operation can be accomplished by applying a known control method, and therefore will not herein be described in detail.

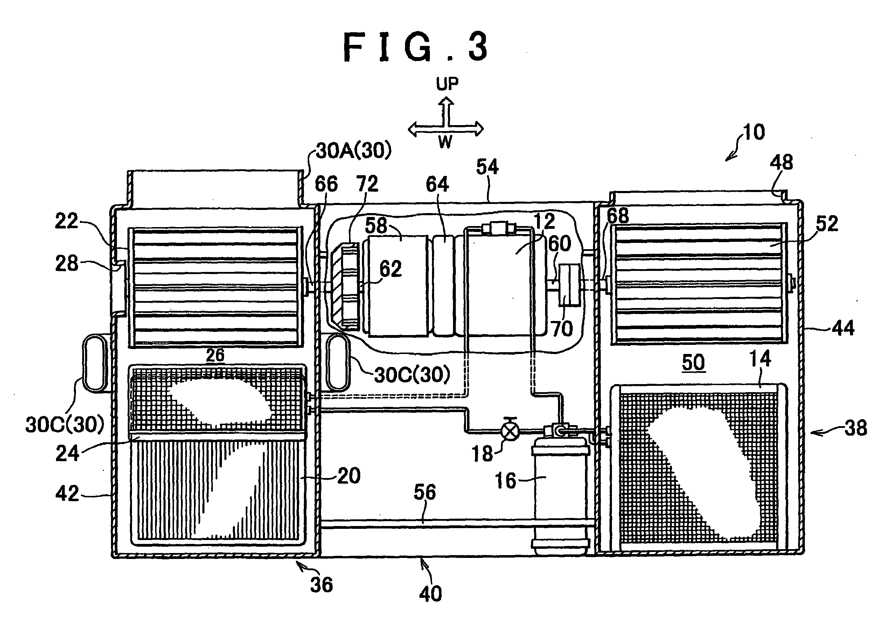

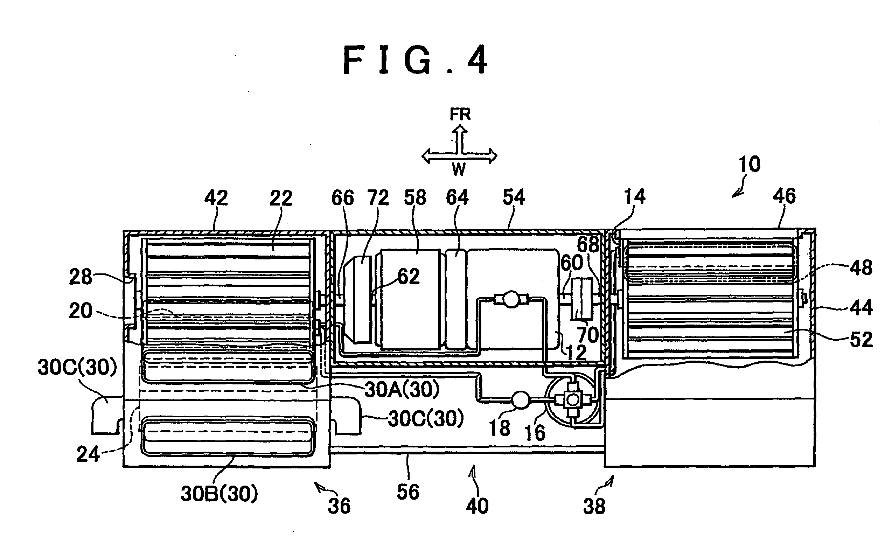

Incidentally, as shown in FIGS. 1, 3 and 4, the air-conditioner 10 in accordance with the first embodiment includes an air-conditioner module 36, a condenser module 38 and a compressor module 40.

In this air-conditioner 10, the air-conditioner module 36 is disposed at an end side of the air-conditioner 10 in the vehicle transverse direction, and the condenser module 38 is disposed at the other end side in the vehicle transverse direction. The air-conditioner module 36 and the condenser module 38 are coupled to each other by the compressor module 40 disposed between the air-conditioner module 36 and the condenser module 38. Thus, the air-conditioner module 36, the condenser module 38 and the compressor module 40 are integrated. In the following description, the vehicle front side is indicated by an arrow Fr, and the vehicle upward side is indicated by an arrow Up, and outward sides in the vehicle transverse direction are indicated by arrows W in a situation where the air-conditioner 10 is mounted in a vehicle.

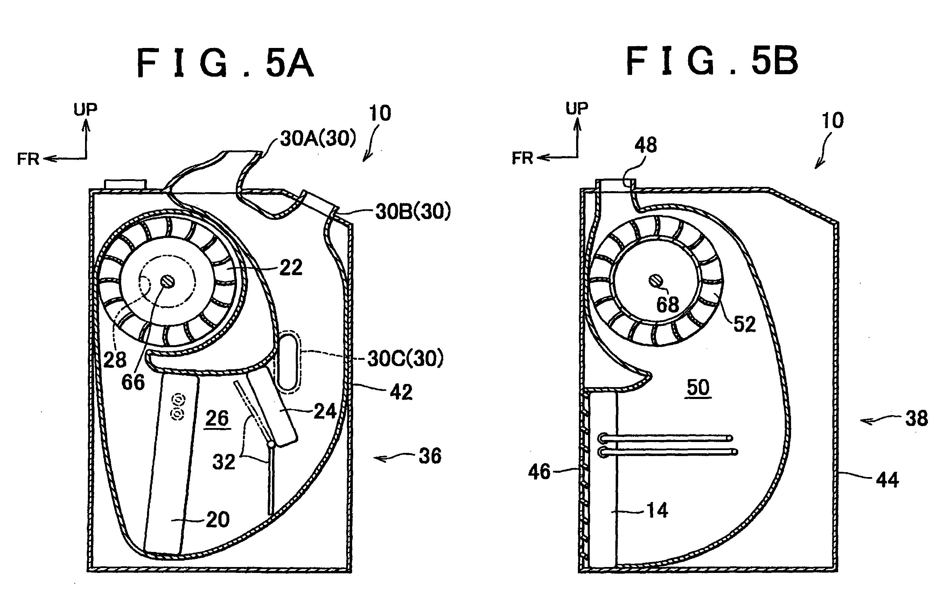

As shown in FIG. 5A, in the air-conditioner module 36, a channel 26 of air-conditioned airflow is formed in a casing 42, and the blower fan 22, the evaporator 20, the air-mixing damper 32 and the heater core 24 are disposed in that order in the channel 26.

The air-conditioner 10 employs a centrifugal fan as the blower fan 22. As shown in FIGS. 1, 3 and 4, the blower fan 22 in the air-conditioner module 36 is disposed so that an axis of the blower fan 22 lies in the vehicle transverse direction. The casing 42 of the air-conditioner module 36 has the introduction opening 28 in the outward side in the vehicle transverse direction.

Therefore, in the air-conditioner module 36, when the blower fan 22 is rotationally driven, air is introduced into the channel 26 from the outward side in the vehicle transverse direction, so that the air flows along the channel 26 to the downstream side of the heater core 24.

Furthermore, as shown in FIGS. 1, 3, 4 and 5A, the outlet ducts 30A, 30B, 30C are coupled to the casing 42 of the air-conditioner module 36. Therefore, the air-conditioned airflow generated in the air-conditioner module 36 can be supplied to the defroster outlet openings 34A, the register outlet openings 34B and the floor outlet openings 34C (which are shown in FIG. 2).

On the other hand, in the condenser module 38, the condenser 14 is disposed in a casing 44 as shown in FIGS. 1, 3, 4 and 5B. As shown in FIGS. 1 and 5B, the condenser 14 is directed to the vehicle front side.

As shown in FIG. 5B, the casing 44 has a grille 46 in a surface thereof that faces the condenser 14 and that is located at the vehicle front side. An exhaust opening 48 is formed in a top surface of the casing 44. In the casing 44, a channel 50 of air linking the grille 46 and the exhaust opening 48 in communication is formed.

In the channel 50, the condenser 14 is disposed, and a condenser fan 52 is provided at an exhaust opening 48 side of the condenser 14. In the embodiment, a reflux fan having an impellor on an outer peripheral portion is used as the condenser fan 52. The condenser fan 52 is disposed in the condenser module 38 so that an axis of the condenser fan 52 lies in the vehicle transverse direction.

Therefore, when the condenser fan 52 is rotationally driven, air is introduced through the grille 46. The air introduced through the grille 46 then passes through the condenser 14, cooling the condenser 14. The condenser module 38 is also constructed so that air forward of the vehicle can be introduced as a cooling airflow for the condenser 14 when the vehicle runs.

Furthermore, as shown in FIGS. 1, 3 and 4, the compressor module 40 has a casing 54. The air-conditioner 10 is assembled by, for example, coupling the casing 42 of the air-conditioner module 36 and the casing 44 of the condenser module 38 via the casing 54 or a frame 56 of the compressor module 40.

Although in the air-conditioner 10 in accordance with this embodiment the casings 42, 44, 54 are coupled to form a single unit, this is not restrictive, and any suitable construction may be used. For example, it is permissible to adopt a construction in which one casing is divided into three portions by partition walls, and the air-conditioner module, the compressor module and the condenser module are formed respectively in the three divided portions.

The compressor 12 and also an electric motor 58 that serves as a motive power source of the air-conditioner 10 are provided in the casing 54 of the compressor module 40. In this construction, the compressor 12 is provided at a condenser module 38 side, and the electric motor 58 is provided at an air-conditioner module 36 side. A rotation shaft 60 of the compressor 12 and a driving shaft 62 of the electric motor 58 are disposed in the vehicle transverse direction, and the rotation shaft 60 and the driving shaft 62 are provided on the same axis (coaxial).

The rotation shaft 60 of the compressor 12 is protruded on both sides in the direction of the axis, and the driving shaft 62 of the electric motor 58 are protruded on both sides in the direction of the axis. The rotation shaft 60 of the compressor 12 and the driving shaft 62 of the electric motor 58 are interconnected via an electromagnetic clutch 64 provided as first clutch means. Specifically, the compressor 12 and the electric motor 58 are coupled via an electromagnetic clutch 64. In the first embodiment, the compressor 12 and the electric motor 58 are coupled so as to be integrated by the electromagnetic clutch 64.

Therefore, in the air-conditioner 10, when the electromagnetic clutch 64 is turned on, the torque of the electric motor 58 is transmitted to the compressor 12, so that the compressor 12 is rotationally driven.

The rotation shaft 66 of the blower fan 22 and the rotation shaft 68 of the condenser fan 52 are disposed coaxially with the rotation shaft 60 of the compressor 12 and the driving shaft 62 of the electric motor 58 in the air-conditioner 10.

The rotation shaft 68 of the condenser fan 52 is protruded through the casing 44 into the casing 54. The rotation shaft 68 and the rotation shaft 60 of the compressor 12 are coupled via an electromagnetic clutch 70 provided as second clutch means.

Therefore, when the electromagnetic clutch 64 and the electromagnetic clutch 70 are turned on while the electric motor 58 is being rotationally driven, the torque of the electric motor 58 comes to be transmitted to the condenser fan 52 via the rotation shaft 60 of the compressor 12, so that the condenser fan 52 is rotationally driven.

Furthermore, the condenser fan 52 is in a stopped state even if the electric motor 58 is being rotationally driven, not only when the electromagnetic clutch 70 is off, but also when the electromagnetic clutch 64 is off.

The rotation shaft 66 of the blower fan 22 is protruded through the casing 42 into the compressor module 40 (into the casing 54). The rotation shaft 66 is coupled to the driving shaft 62 of the electric motor 58.

Therefore, when the electric motor 58 is rotationally driven, the torque thereof is transmitted to the blower fan 22, so that the blower fan 22 is rotationally driven. That is, in the air-conditioner 10, when the electric motor 58 is driven, the blower fan 22 is rotationally driven to blow air-conditioned airflow.

In the air-conditioner 10 in accordance with the first embodiment, a speed change mechanism 72 is provided between the blower fan 22 and the electric motor 58. The rotation shaft 66 of the blower fan 22 and the driving shaft 62 of the electric motor 58 are interconnected via the speed change mechanism 72.

The speed change mechanism 72, for example, transmits rotation from the driving shaft 62 to the rotation shaft 66 while reducing the speed of rotation. Besides, the speed change mechanism 72 is designed to be able to change the speed reduction ratio. Therefore, the air-conditioner 10 is able to control the amount of blower airflow by controlling the speed change ratio of the speed change mechanism 72.

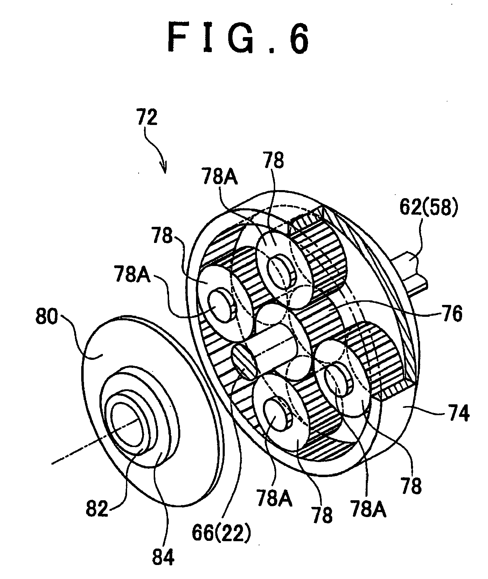

FIG. 6 shows an example of the speed change mechanism 72. This speed change mechanism 72 is a planetary gear mechanism that includes an internal gear 74 having internal teeth, a sun gear 76 disposed coaxially with the internal gear 74 and having external teeth, and a plurality of planetary gears 78 disposed between the internal gear 74 and the sun gear 76.

The driving shaft 62 of the electric motor 58 is coupled to the internal gear 74, so that the internal gear 74 is rotated by the drive force of the electric motor 58. The rotation shaft 66 of the blower fan 22 is coupled to the sun gear 76. As rotation of the internal gear 74 is transmitted to the sun gear 76 via the planetary gears 78, the sun gear 76 and the blower fan 22 are rotated together.

Furthermore, the speed change mechanism 72 is provided with a disc-shape carrier plate 80. Rotation shafts 78A of the planetary gears 78 are journaled at predetermined positions on the carrier plate 80. Furthermore, a tubular rotation shaft 82 is coaxially coupled to the carrier plate 80, and the rotation shaft 82 and the carrier plate 80 are integrally rotated.

The rotation shaft 66 is inserted into the rotation shaft 82 so that the rotation shafts 66, 82 are rotatable relative to each other.

A brake portion 84 is provided on an outer peripheral portion of the rotation shaft 82. The brake portion 84 is fixed to a casing (not shown) or the like of the speed change mechanism 72 so as to be rotatable relative to the rotation shaft 82. The brake portion 84 has a brake structure that employs, for example, a brake shoe. By actuating an actuator (not shown), the brake portion 84 generates friction resistance against the outer peripheral surface of the rotation shaft 82. In this manner, the brake portion 84 is able to give rotation resistance to the rotation shaft 82. In this construction, the friction resistance (rotation resistance) is variable in accordance with the amount of action of the actuator.

When the friction resistance of the rotation shaft 82 is small and the rotational resistance of the rotation shaft 66 of the blower fan 22 is larger than the rotational resistance of the rotation shaft 82, the planetary gears 78 turned by the internal gear 74 turn around the sun gear 76 while the rotation shaft 66, together with the sun gear 76, assumes a rotation stopped state.

On the other hand, when the brake portion 84 is actuated to increase the rotational resistance of the rotation shaft 82, the revolution of the planetary gears 78 around the sun gear 76 as well as the rotation of the carrier plate 80 is restrained, and the rotation shaft 66, together with the sun gear 76, is rotated as the internal gear 74 is rotated.

By further increasing the friction resistance (rotational resistance) that the brake portion 84 gives to the rotation shaft 82, the rotation of the carrier plate 80 (planetary rotation of the planetary gears 78) is restrained, so that the rotation speed of the sun gear 76 and the rotation shaft 66 is increased.

That is, in the speed change mechanism 72, the ratio of the rotation speed of the sun gear 76 to the rotation speed of the internal gear 74 can be changed in accordance with the friction resistance that the brake portion 84 gives to the rotation shaft 82 of the carrier plate 80 that supports the planetary gears 78 by means of shafts, whereby the speed change ratio of the rotation speed of the rotation shaft 66 to the rotation speed of the driving shaft 62 can be changed.

In the air-conditioner 10, the air-conditioner ECU (not shown) performs the driving control of the electric motor 58, and also performs the on/off control of the electromagnetic clutches 64, 70 and the control of the speed change ratio of the speed change mechanism 72.

In the air-conditioner 10 constructed as described above, since the air-conditioner module 36, the condenser module 38 and the compressor module 40 are integrated, an assembly of the air-conditioner module 36, the condenser module 38 and the compressor module 40 prepared beforehand can be mounted in a vehicle, so that the assembling characteristic can be improved.

Furthermore, the air-conditioner 10 is placed at the engine compartment side of the dash panel (not shown) of the vehicle, thus avoiding the air-conditioner 10 reducing the space of a front portion of the cabin.

The air-conditioner 10 performs the air-conditioning operation in one of the air-cooling, air-heating and air-blowing modes. During the operation, in the air-conditioner 10, the electric motor 58 is driven to rotationally drive the blower fan 22, so that the air-conditioned airflow is blown out from the outlet openings that correspond to the blowout mode.

Furthermore, in the air-conditioner 10, when it is not necessary to drive the compressor 12 during the air-heating operation or the air-blowing operation, that is, when it is not necessary to cool air-conditioned airflow at the evaporator 20, the electromagnetic clutch 64 is turned off.

Therefore, even when the electric motor 58 is driven, the compressor 12 remains in the stopped state. Furthermore, since the compressor 12 is at a stop, it is also unnecessary to drive the compressor fan 52, and the compressor fan 52 remains in a stopped state.

On the other hand, during the air-cooling operation during which the cooling of the air-conditioned airflow by the evaporator 20 is needed, the electromagnetic clutch 64 of the air-conditioner 10 is turned on. Therefore, the drive force of the electric motor 58 is transmitted to the compressor 12, so that the compressor 12 is rotationally driven. Thus, it becomes possible to cool the air-conditioned airflow through the use of the evaporator 20.

In some cases, the condenser 14 undergoes a temperature rise as the condenser 14 cools the coolant. If a rise in temperature results in a decline in the cooling efficiency of the coolant, the air-cooling capability of the air-conditioner 10 declines.

This air-conditioner 10 is placed so that the grille 46 provided in the condenser module 38 faces the vehicle front side. Therefore, as the vehicle runs, air flows from the vehicle front side into the engine compartment and is introduced into the channel 50 of the condenser module 38 through the grille 46, and the introduced air cools the condenser 14.

Furthermore, in the air-conditioner 10, when the temperature of the condenser 14 is still high even though external air is introduced through the grille 46 due to the running of the vehicle, the electromagnetic clutch 70 is turned on. At this time, since the electromagnetic clutch 64 has been turned on and therefore the compressor 12 is being rotationally driven, the rotation shaft 68 is rotationally driven via the rotation shaft 60 of the compressor 12, so that the condenser fan 52 is rotationally driven to cool the condenser 14.

Thus, in the air-conditioner 10, the compressor module 40 provided with the electric motor 58 is disposed between the air-conditioner module 36 and the condenser module 38. The blower fan 22 provided in the air-conditioner module 36 and the condenser fan 52 provided in the condenser module 38 are coupled to the electric motor 58.

At this time, an end side of the driving shaft 62 of the electric motor 58 and the rotation shaft 66 of the blower fan 22 are coupled via the speed change mechanism 72, and the rotation shaft 60 of the compressor 12 is coupled to the other end side of the driving shaft 62 of the electric motor 58 via the electromagnetic clutch 64, and the rotation shaft 68 of the condenser fan 52 is coupled to the other end side of the rotation shaft 60 of the compressor 12 via the electromagnetic clutch 70.

Therefore, for example, if the condenser 14 can be cooled by the air introduced due to the running of the vehicle when the compressor 12 is being driven, the load of the electric motor 58 can be reduced by turning off the electromagnetic clutch 70. Besides, during an operation state during which the driving of the compressor 12 can be stopped, for example, during the air-blowing operation, or during the air-heating operation, the load on the electric motor 58 can be considerably reduced by turning off the electromagnetic clutch 64.

Thus, the air-conditioner 10 can properly drive the compressor 12, the blower fan 22 and the condenser fan 52 by using one electric motor 58.

Therefore, the air-conditioner 10 does not need a plurality of electric motors, but the number of component parts can be reduced and the power conservation can be achieved. Furthermore, in the air-conditioner 10, the number of component parts can be reduced and improvement of assembling characteristic can be achieved, so that further cost reduction can be achieved.

Next, a second embodiment of the invention will be described. A basic construction of the second embodiment is the same as that of the first embodiment, and the same component parts as those in the first embodiment are assigned with the same reference characters, and the description thereof is omitted.

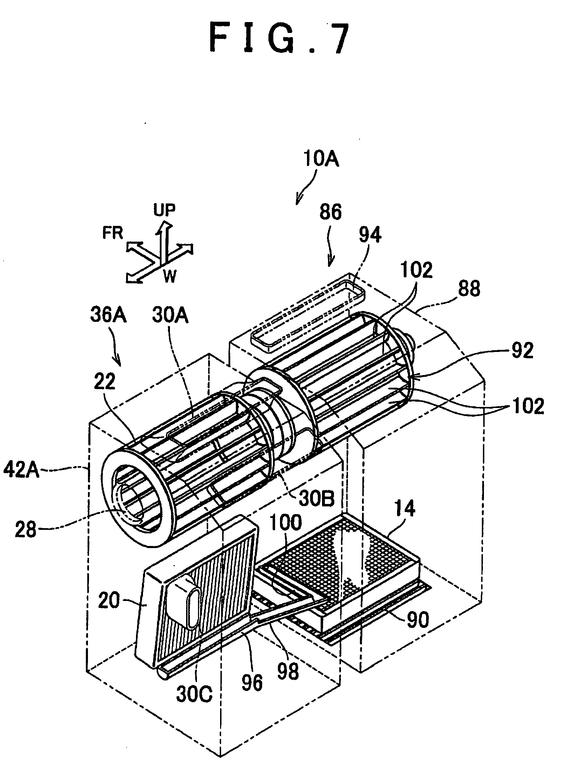

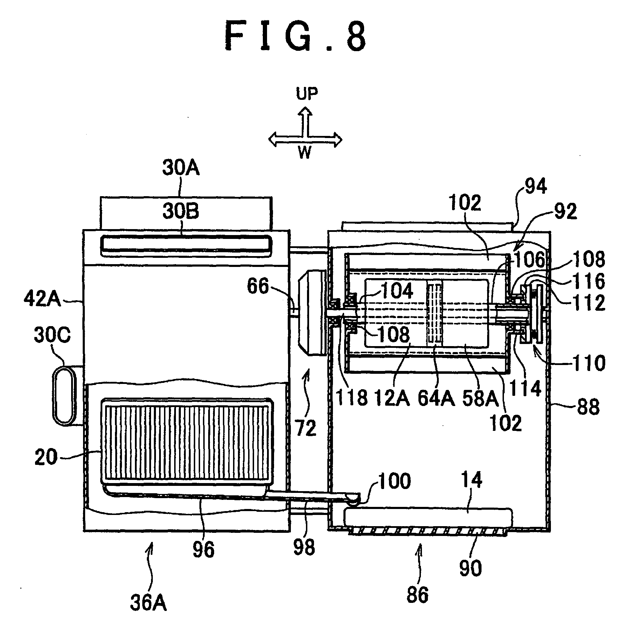

FIGS. 7 and 8 show an overall construction of an air-conditioner 10A in accordance with the second embodiment. This air-conditioner 10A includes an air-conditioner module 36A that includes an evaporator 20, a blower fan 22, etc., and a coolant module 86 combining the function of the condenser module 38 and the function of the compressor module 40.

In the air-conditioner 10A, the air-conditioner module 36A and the coolant module 86 are integrally coupled to each other, and the air-conditioner module 36A and the coolant module 86 are placed in a vehicle in an arrangement along the vehicle transverse direction. In FIGS. 7 and 8, portions of the air-conditioner module 36A and the coolant module 86 are shown.

In the coolant module 86 of the air-conditioner 10A, main components constituting the refrigeration cycle, including a compressor 12A, a condenser 14, etc., except an evaporator 20, are assembled.

In the coolant module 86, the condenser 14 is disposed in a substantially horizontal state in a lower portion of a casing 88, and an exhaust grille 90 is formed under the condenser 14. In the casing 88, a condenser fan 92 is disposed in an upper portion of the casing 88, and an introduction opening 94 is formed in an upper surface of the casing 88.

Therefore, as the condenser fan 92 is rotationally driven, external air is introduced from the introduction opening 94, and the introduced external air passes through the condenser 14, and is discharged from the exhaust grille 90, so that the air cools the condenser 14. Although the introduction opening 94 is formed in the upper surface of the casing 88 as an example, this may be changed. For example, it is permissible to adopt a construction in which a grille 46 is disposed on a vehicle front side of the condenser fan 92 and external air for cooling the condenser 14 is introduced from the grille 46. Therefore, during the running of the vehicle, the condenser 14 can be cooled without driving the condenser fan 92.

Furthermore, in the air-conditioner 10A, a gutter-shape water catchment portion 96 is provided at a lower portion of the evaporator 20. The water catchment portion 96 is constructed so as to catch water deposited on the evaporator 20, and is coupled to a discharge passageway 98 as diffusion means at the coolant module 86 side. Although the water catchment portion 96 as an example of collection means is formed in the shape of a gutter, this is not restrictive. The water catchment portion 96 may have any shape as long as the water or moisture deposited on the evaporator 20 can be collected.

The discharge passageway 98 extends through a casing 42A of the air-conditioner module 36A, and extends into the casing 88 of the coolant module 86. Although the discharge passageway 98 may be in a gutter shape, it is more preferable that the discharge passageway 98 be in a pipe shape.

In the air-conditioner 10A, an upper surface of the condenser 14 provided in the coolant module 86 is below the lower end portion of the evaporator 20 provided in the air-conditioner module 36A, and a diffusion portion 100 is disposed on an upper side of the condenser 14.

The discharge passageway 98 is coupled to the diffusion portion 100. Therefore, the water collected from the evaporator 20 is supplied to the diffusion portion 100, and is dripped in the form of droplets from the diffusion portion 100 to the condenser 14 while being diffused.

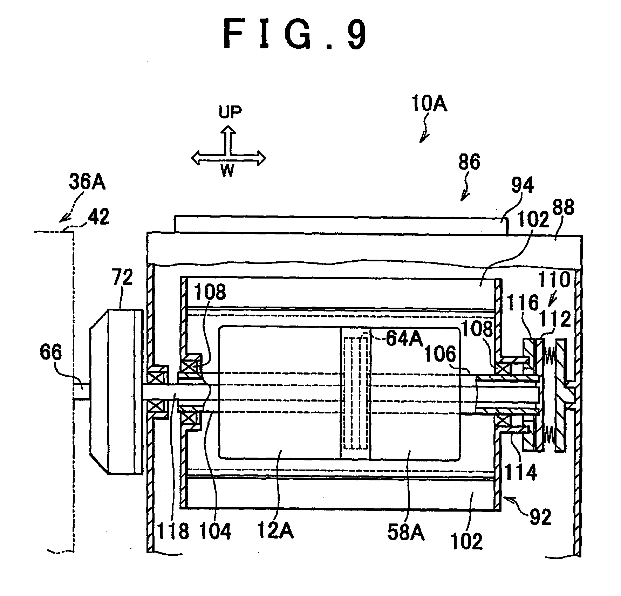

Besides, as shown in FIGS. 8 and 9, the air-conditioner 10A employs as a condenser fan 92 a cross-flow fan that has an impellor 102 in an outer peripheral portion, and a hollow space inside.

In the air-conditioner 10A, a compressor 12A and an electric motor 58A are disposed within the hollow space of the condenser fan 92. The rotation shaft 104 of the compressor 12A and the driving shaft 106 of the electric motor 58A are coupled via an electromagnetic clutch 64A provided as first clutch means. As the electromagnetic clutch 64A is turned on, the compressor 12A is rotationally driven by the electric motor 58A.

In the coolant module 86, the compressor 12A is disposed at an air-conditioner module 36A side. The condenser fan 92 is supported, via bearings 108, 108, on a driving shaft 106 protruded from the electric motor 58A to a side opposite from the compressor 12A and on a rotation shaft 104 protruded from the compressor 12A to a side opposite from the electric motor 58A so that the condenser fan 92 is freely rotatable relative to the driving shaft 106 and the rotation shaft 104.

Furthermore, in the coolant module 86, the rotation shaft 104 of the compressor 12A and the driving shaft 106 of the electric motor 58A are journaled to the casing 88, so that the compressor 12A and the electric motor 58A, together with the condenser fan 92, are supported by the casing 88.

A distal end portion of the driving shaft 106 protruded from the electric motor 58A is provided with an electromagnetic clutch 110 as second clutch means. The driving shaft 106 is coupled to a driving plate 112 of the electromagnetic clutch 110 so that the driving shaft 106 and the driving plate 112 rotate together as an integral unit. The rotation shaft 114 of the condenser fan 92 is coupled to a driven plate 116 disposed facing the driving plate 112 so as to rotate integrally with the driven plate 116.

When the electromagnetic clutch 110 is in an off-state, the driving plate 112 and the driven plate 116 are apart from each other and are rotatable relative to each other. When the electromagnetic clutch 110 is turned on, the driving plate 112 and the driven plate 116 contact each other and are rotated as an integral unit. Therefore, when the electromagnetic clutch 110 is on, the condenser fan 92 is rotationally driven by the drive force from the electric motor 58A.

The rotation shaft 104 of the compressor 12A and the driving shaft 106 of the electric motor 58A have a hollow tubular shape. A transmission shaft 118 is inserted through the hollow spaces of the rotation shaft 104 and the driving shaft 106.

The transmission shaft 118 is rotatable relative to each of the rotation shaft 104 and the driving shaft 106. An end side of the transmission shaft 118 in the direction of the axis is coupled to the driving plate 112 of the electromagnetic clutch 110 so as to be rotated integrally with the driving plate 112.

In the air-conditioner 10A, each of the condenser 12A, the electric motor 58A and the condenser fan 92 is coaxial with the blower fan 22 of the air-conditioner module 36A. The other end side of the transmission shaft 118 is protruded from the casing 88 of the coolant module 86, and is coupled to a speed change mechanism 72. Via the speed change mechanism 72, the transmission shaft 118 is coupled to the rotation shaft 66 of the blower fan 22.

Therefore, the drive force of the electric motor 58A is transmitted to the blower fan 22 via the transmission shaft 118 so that the blower fan 22 is rotationally driven.

The air-conditioner 10A constructed as described above starts driving the electric motor 58A upon receiving a command to perform air-conditioning operation. Therefore, the drive force of the electric motor 58A is transferred from the driving shaft 106 to the blower fan 22 via the transmission shaft 118 and the speed change mechanism 72, so that the blower fan 22 is rotationally driven. Thus, air-conditioned airflow is blown out from the outlet openings 30. At this time, by controlling the speed change mechanism 72, the blower fan 22 is rotationally driven at a desired rotation speed, and the volume of blower air is accordingly controlled.

During the air-blowing operation, the air-heating operation or the like of the air-conditioner 10A, during which the driving of the compressor 12A is not necessary, the electromagnetic clutch 64A is turned off, so that even when the electric motor 58A is driven, the compressor 12A remains in a non-driven or stopped state.

When the compressor 12A is in the stopped state, the cooling of the condenser 14 is not necessary. Therefore, on that occasion, the electromagnetic clutch 110 may be turned off, so that the condenser fan 92 can be put into a stopped state.

On the other hand, at the time of the air-cooling operation of the air-conditioner 10A, the electromagnetic clutch 64A is turned on. Therefore, the drive force of the electric motor 58A is transmitted to the compressor 12A, so that the compressor 12A is rotationally driven.

When the compressor 12A is rotationally driven, the condenser 14 undergoes a rise in temperature as it cools the coolant, so that it sometimes becomes necessary to cool the condenser 14. On such an occasion, the electromagnetic clutch 110 is turned on.

Therefore, the driving plate 112 and the driven plate 116 of the electromagnetic clutch 110 start to rotate together as an integral unit. Thus, the drive force of the electric motor 58A is transmitted to the condenser fan 92 via the electromagnetic clutch 110, so that the condenser fan 92 is rotationally driven, cooling the condenser 14.

Furthermore, when the compressor 12A is rotationally driven, the air that passes through the evaporator 20 is cooled. In association with this, moisture in the air condenses and deposits on the evaporator 20.

In the air-conditioner 10A, the water or moisture from air deposited on the evaporator 20 during the air-cooling operation is collected by the water catchment portion 96, and the collected water is sent and dripped onto the condenser 14. while being diffused, from the diffusion portion 100 via a discharge water passageway 9.

Therefore, the water or moisture dripped onto the condenser 14 is evaporated by heat from the condenser 14, so that the cooling of the condenser 14 is promoted.

Therefore, the air-conditioner 10A in which the air-conditioner module 36A and the coolant module 86 are integrated and are disposed on the dash panel within the engine compartment is also able to reliably cool the condenser 14 and therefore perform an efficient air-cooling operation.

The electric motor 58A, when driven, produces heat and undergoes a rise in temperature. Besides, the compressor 12A, when rotationally driven, compresses the coolant, so that the temperature of the coolant rises, resulting in a rise of the temperature of the compressor 12A as well.

In the air-conditioner 10A, the condenser fan 92 used herein is of a cross-flow type that has an inner hollow space. In the condenser fan 92, the compressor 12A and the electric motor 58A are disposed. As the condenser fan 92 is rotationally driven, external air is introduced from the introduction opening 94, and is caused to pass around the compressor 12A and the electric motor 58A.

Thus, the air-conditioner 10A is designed to cool the compressor 12A and the electric motor 58A by rotationally driving the condenser fan 92 so as to prevent a rise in the temperature thereof.

The electric motor 58A is constructed so as to be driven also during the air-blowing operation, the air-heating operation or the like of the air-conditioner 10A during which the compressor 12A is stopped. On such occasions, therefore, the temperature of the electric motor 58A sometimes rises.

Even when the compressor 12A is in the stopped state, the air-conditioner 10A allows the condenser fan 92 to be rotationally driven by turning on the electromagnetic clutch 110, so that the electric motor 58A can be cooled.

Therefore, the air-conditioner 10A is able to perform an efficient air-conditioning operation while restraining the temperature rise of the compressor 12A and the electric motor 58A as well as of the condenser 14.

Furthermore, since the compressor 12A and the electric motor 58A are integrated and are disposed in an axially center portion of the condenser fan 92, the air-conditioner 10A can achieve a compact construction as compared with a case where the compressor 12A, the electric motor 58A and the condenser fan 92 are disposed side by side in series in the direction of the axis.

Incidentally, although in the air-conditioner 10A in accordance with the second embodiment, the compressor 12A and the electric motor 58A provided in the coolant module 86 are disposed so that the compressor 12A is located at the air-conditioner module 36A side of the electric motor 58A, this is not restrictive, but any other suitable construction can also be applied. For example, the compressor 12A and the electric motor 58A may also be disposed so that the electric motor 58A is located at the air-conditioner module 36A side of the compressor 12A, and at the same time, the electromagnetic clutch 110 is located at the air-conditioner module 36A of the electric motor 58A.

Next, a third embodiment of the invention will be described. A basic construction of the third embodiment is the same as that of the first embodiment, and the same component parts as those in the first embodiment are assigned with the same reference characters, and the description thereof is omitted.

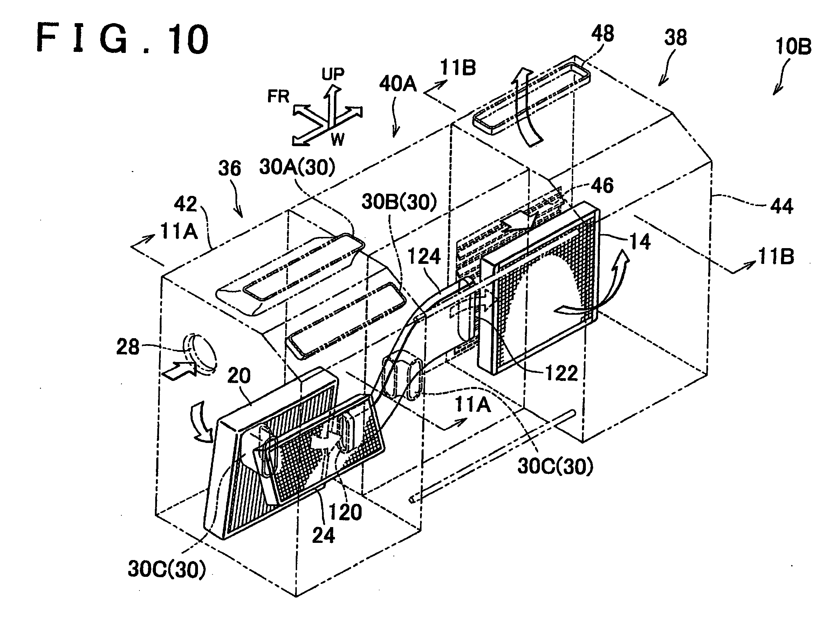

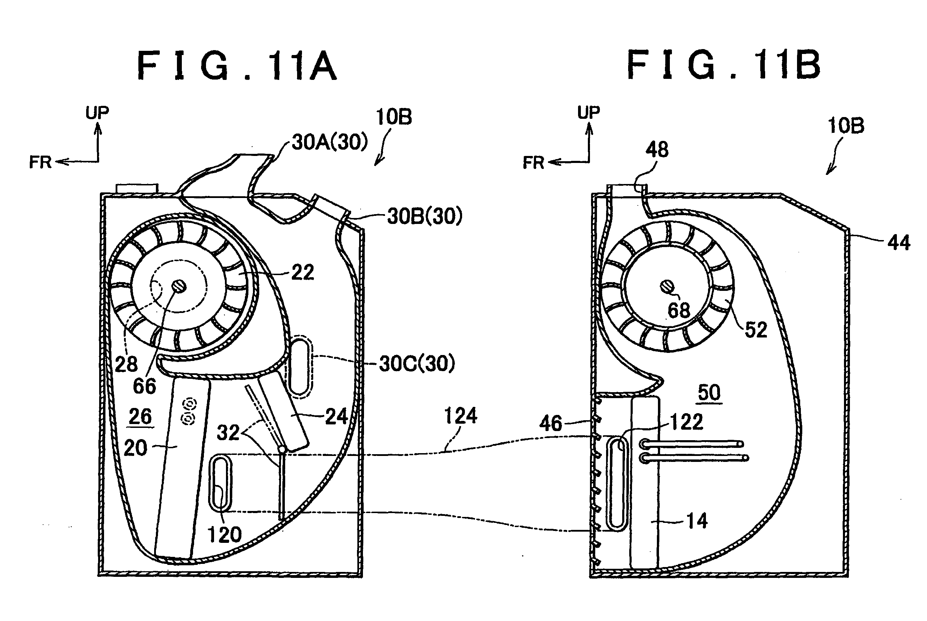

FIGS. 10, 11A and 11B show an overall construction of an air-conditioner 10B in accordance with the third embodiment. FIGS. 10, 11A and 11B show portions of the air-conditioner 10B.

As shown in FIGS. 10 and 11A, an air-conditioner module 36 of an air-conditioner 10B has a suction opening 120 in a casing 42. The suction opening 120 is formed in a condenser module 38-side wall of the casing 42 between an evaporator 20 and a heater core 24.

Therefore, the air having passed through the evaporator 20 can be blown from the suction opening 120 to outside the casing 42.

Furthermore, as shown in FIGS. 10 and 11B, the condenser module 38 of the air-conditioner 10B has a discharge opening 122 in a casing 44. The discharge opening 122 is formed in an air-conditioner module 36-side wall of the casing 44, between a grille 46 and a condenser 14.

Therefore, in the condenser module 38, the air drawn from the grille 46 or the discharge opening 122 can be introduced for the purpose of cooling the condenser 14.

Furthermore, as shown in FIGS. 10, 11A and 11B, in the air-conditioner 10B, a compressor module 40A disposed between the air-conditioner module 36 and the condenser module 38 is provided with an air duct 124.

An end side of the air duct 124 is coupled to the suction opening 120 formed in the casing 42 of the air-conditioner module 36, and the other end side air duct 124 is coupled to the discharge opening 122 formed in the casing 44 of the condenser module 38. Therefore, the suction opening 120 of the air-conditioner module 36 and the discharge opening 122 of the condenser module 38 are linked in communication by the air duct 124.

In the air-conditioner 10B constructed as described above, as the blower fan 22 is rotationally driven, air is drawn from the introduction opening 28, and passes through the evaporator 20. The air having passed through the evaporator 20 flows in a channel 26 to a heater core 24 side, and then is blown out as an air-conditioned airflow from the outlet openings 30.

In the air-conditioner 10B, the suction opening 120 of the air duct 124 is formed at a downstream side of the evaporator 20, so that the air having passed through the evaporator 20 is sent from the suction opening 120 through the air duct 124 to the condenser module 38. The air is blown into a channel 50 in the condenser module 38 from the discharge opening 122 of the air duct 124 that is formed between the condenser 14 and the grille 46. Thus, the air is used to cool the condenser 14.

In the case where the air-conditioner 10B is performing the air-cooling operation, the air cooled by the evaporator 20 is sent to the condenser module 38, so that the air cools the condenser 14.

Therefore, even if the air-conditioner 10B is disposed near the dash panel within the engine compartment where the cooling efficiency of the condenser 14 is relatively low, the condenser 14 can be cooled by the air cooled by the evaporator 20.

Therefore, in the air-conditioner 10B, the temperature rise of the condenser 14 is restrained, and an efficient air-conditioning operation utilizing the cooling cycle can be performed.

Incidentally, the foregoing embodiment does not restrict the construction of the invention. For example, although in the foregoing embodiment, the blower fan and the compressor as well as the electric motor and the condenser fan are coaxially disposed, the invention is not limited to this construction.

Furthermore, the vehicular air-conditioner device of the invention is applicable to any suitable construction of vehicle that employs an engine or an electric motor as a drive source.

## Claims

1. A vehicular air-conditioner device which has a refrigeration cycle that includes a compressor (12, 12A), a condenser (14), and an evaporator (20), and which air-conditions a cabin by an air-conditioned airflow generated by causing air to pass through the evaporator (20) or heating means (24) through driving the blower fan (22), **characterized in that** the vehicular air-conditioner device comprises an electric motor (58, 58A) that drives the compressor (12, 12A), the blower fan (22), and a condenser fan (52, 92) that cools the condenser (14), and an end of a driving shaft (62, 106) of the electric motor (58, 58A) is coupled to a rotation shaft (60, 104) of the compressor (12, 12A) via first clutch means (64, 64A), and another end of the driving shaft (62, 106) is coupled to a rotation shaft (66) of the blower fan (22), **characterized in that** the condenser fan (52, 92) is coupled to one of the rotation shaft (60) of the compressor (12, 12A) and the rotation shaft (66) of the blower fan (22) via second clutch means (70, 110).

2. The vehicular air-conditioner device according to claim 1, **characterized in** by comprising an air-conditioner module (36, 36A) that houses the blower fan (22) and the evaporator (20) and that generates the air-conditioned airflow, and a condenser module (38) that houses at least the condenser (14) and the condenser fan (52, 92), the air-conditioner module (36, 36A) and the condenser module (38) being integrally coupled so that the rotation shaft (66) of the blower fan (22) and a rotation shaft (68, 114) of the condenser fan (52, 92) are coaxial.

3. The vehicular air-conditioner device according to claim 2, **characterized by** comprising an air duct (124) that has an end near the evaporator (20) and has another end near the condenser (14).

4. The vehicular air-conditioner device according to claim 3, **characterized in that** the one end of the air duct (124) is coupled to a suction opening (120) formed in a casing (42) of the air-conditioner module (36), and the another end of the air duct (124) is coupled to a discharge opening (122) formed in a casing (44) of the condenser module (38).

5. The vehicular air-conditioner device according to any one of claim 1 or 2, **characterized in that** the condenser fan (92) is a cross-flow fan, and the compressor (12A) and the electric motor (58A) are disposed in a hollow of the condenser fan (92).

6. The vehicular air-conditioner device according to any one of claims 1, 2 and 5, **characterized in that** the condenser (14) is disposed so that a cooling airflow for cooling the condenser (14) passes in a vehicle up-down direction, and the vehicular air-conditioner device further comprises collection means (96) for collecting water from air that deposits on the evaporator (20), and diffusion means (98, 100) for guiding the water collected by the collection means (96) to the condenser (14) and dripping the water to the condenser (14) while diffusing the water.

## Patentansprüche

1. Fahrzeug-Klimaanlagengerät, welches einen Kühlkreislauf aufweist, welcher einen Kompressor (12, 12A), einen Kondensator (14) und einen Verdampfer (20) beinhaltet, und welches eine Kabine durch einen klimatisierten Luftstrom klimatisiert, welcher dadurch erzeugt wird, dass Luft dazu gebracht wird, durch den Verdampfer (20) oder Heizmittel (24) durch den Antrieb des Gebläses (22) zu strömen, **dadurch gekennzeichnet, dass** das Fahrzeug-Klimaanlagengerät einen Elektromotor (58, 58A) umfasst, welcher den Kompressor (12, 12A), das Gebläse (22) und ein Kondensatorgebläse (52, 92), das den Kondensator (14) kühlt, antreibt, und ein Ende einer Antriebswelle (62, 106) des Elektromotors (58, 58A) mit einer Rotationswelle (60, 104) des Kompressors (12, 12A) durch erste Kupplungsmittel (64, 64A) gekoppelt ist, und ein anderes Ende der Antriebswelle (62, 106) mit einer Rotationswelle (66) des Gebläses (22) gekoppelt ist, **dadurch gekennzeichnet, dass** das Kondensatorgebläse (52, 92) mit einer der Rotationswelle (60) des Kompressors (12, 12A) und der Rotationswelle (66) des Gebläses (22) durch zweite Kupplungsmittel (70, 110) gekoppelt ist.

2. Fahrzeug-Klimaanlagengerät nach Anspruch 1, **dadurch gekennzeichnet, dass** es ein Klimaanlagen-Modul (36, 36A), welches das Gebläse (22) und den Verdampfer (20) aufnimmt, und welches den klimatisierten Luftstrom erzeugt, sowie ein Kondensator-Modul (38), welches mindestens den Kondensator (14) und das Kondensatorgebläse (52, 92) aufnimmt, umfasst, wobei das Klimaanlagen-Modul (36, 36A) und das Kondensator-Modul (38) einstückig derart gekoppelt sind, dass die Rotationswelle (66) des Gebläses (22) und eine Rotationswelle (68, 114) des Kondensatorgebläses (52, 92) koaxial sind.

3. Fahrzeug-Klimaanlagengerät nach Anspruch 2, **dadurch gekennzeichnet, dass** es einen Luftkanal (124) umfasst, von dem sich ein Ende in der Nähe des Verdampfers (20) befindet, und ein anderes Ende in der Nähe des Kondensators (14) befindet.

4. Fahrzeug-Klimaanlagengerät nach Anspruch 3, **dadurch gekennzeichnet, dass** das eine Ende des Luftkanals (124) mit einer Ansaugöffnung (120) verbunden ist, welche in einem Gehäuse (42) des Klimaanlagen-Moduls (36) gebildet ist, und das andere Ende des Luftkanals (124) mit einer Abströmöffnung (122) gekoppelt ist, welche in einem Gehäuse (44) des Kondensator-Moduls (38) gebildet ist.

5. Fahrzeug-Klimaanlagengerät nach einem der Ansprüche 1 oder 2, **dadurch gekennzeichnet, dass** das Kondensatorgebläse (92) ein Querstromgebläse ist, und der Kompressor (12A) und der Elektromotor (58A) in einer Aushöhlung des Kondensatorgebläses (92) angeordnet sind.

6. Fahrzeug-Klimaanlagengerät nach einem der Ansprüche 1, 2 und 5, **dadurch gekennzeichnet, dass** der Kondensator (14) derart angeordnet ist, dass ein kühlender Luftstrom zum Kühlen des Kondensators (14) in einer Richtung von oben nach unten im Fahrzeug verläuft, und das Fahrzeug-Klimaanlagengerät außerdem Sammelmittel (96) zum Sammeln von Wasser aus der Luft, welches sich an dem Verdampfer (20) niederschlägt, und Diffusionsmittel (98, 100) zum Führen des durch die Sammelmittel (96) gesammelten Wassers zu dem Kondensator (14) und Abtropfen des Wassers an den Kondensator (14), während das Wasser diffundiert wird, umfasst.

## Revendications

1. Climatiseur pour véhicule qui a un cycle de réfrigération qui inclut un compresseur (12, 12A), un condenseur (14) et un évaporateur (20), et qui climatise un habitacle par un flux d'air climatisé en faisant que de l'air passe à travers l'évaporateur (20) ou un moyen de chauffage (24) par l'entraînement d'un ventilateur de soufflante (22), **caractérisé en ce que** le climatiseur pour véhicule comprend un moteur électrique (58, 58A) qui entraîne le compresseur (12, 12A), le ventilateur de soufflante (22) et un ventilateur de condenseur (52, 92) qui refroidit le condenseur (14), et **en ce qu'**une extrémité de l'arbre d'entraînement (62, 106) du moteur électrique (58, 58A) est accouplée à l'arbre rotatif (60, 104) du compresseur (12, 12A) via un premier moyen d'embrayage (64, 64A), et l'autre extrémité de l'arbre d'entraînement (62, 106) est accouplée à l'arbre rotatif (66) du ventilateur de soufflante (22), **caractérisé en ce que** le ventilateur de condenseur (52, 92) est accouplé à l'un de l'arbre rotatif (60) du compresseur (12, 12A) et de l'arbre rotatif (66) du ventilateur de soufflante (22) via un second moyen d'embrayage (70, 110).

2. Climatiseur pour véhicule selon la revendication 1, **caractérisé en ce qu'**il comprend un module de climatiseur (36, 36A) qui loge le ventilateur de soufflante (22) et l'évaporateur (20) et qui engendre le flux d'air climatisé, et un module de condenseur (38) qui loge au moins le condenseur (14) et le ventilateur de condenseur (52, 92), le module de climatiseur (36, 36A) et le module de condenseur (38) étant accouplés en un seul bloc de sorte que l'arbre rotatif (66) du ventilateur de soufflante (22) et l'arbre rotatif (68, 114) du ventilateur de condenseur (52, 92) sont coaxiaux.

3. Climatiseur pour véhicule selon la revendication 2, **caractérisé en ce qu'**il comprend un conduit d'air (124) qui a une première extrémité près de l'évaporateur (20) et qui a une autre extrémité près du condenseur (14).

4. Climatiseur pour véhicule selon la revendication 3, **caractérisé en ce que** la première extrémité du conduit d'air (124) est raccordée à un orifice d'aspiration (120) formé dans le boîtier (42) du module de climatiseur (36), et **en ce que** l'autre extrémité du conduit d'air (124) est raccordée à un orifice d'évacuation (122) formé dans le boîtier (44) du module de condenseur (38).

5. Climatiseur pour véhicule selon l'une quelconque de la revendication 1 ou 2, **caractérisé en ce que** le ventilateur de condenseur (92) est un ventilateur à flux transversal, et **en ce que** le compresseur (12A) et le moteur électrique (58A) sont disposés dans un évidement du ventilateur de condenseur (92).

6. Climatiseur pour véhicule selon l'une quelconque des revendications 1, 2 et 5, **caractérisé en ce que** le condenseur (14) est disposé de façon que le flux d'air de refroidissement destiné à refroidir le condenseur (14) circule dans la direction haut-bas de véhicule, et **en ce que** le climatiseur pour véhicule comprend en outre un moyen (96) de collecte destiné à collecter de l'eau provenant de l'air qui se dépose sur l'évaporateur (20), et un moyen (98, 100) de diffusion destiné à guider l'eau collectée par le moyen (96) de collecte vers le condenseur (14) et à égoutter l'eau dans le condenseur (14) tout en diffusant l'eau.
